# EUROPEAN PATENT APPLICATION

(11) **EP 3 543 935 A1**
(43) Date of publication of application: **25.09.2019**
(21) Application number: 18179690.5
(22) Date of filing: 25.06.2018
(51) Int. Cl.: G06Q 20/32, H04W 4/80

(54) **WEARABLE DEVICE, WRISTWATCH, AND SHORT DISTANCE COMMUNICATION SWITCH METHOD**

(30) Priority: 20.03.2018 TW 107109507
(71) Applicant: Princo Corp., Hsinchu 300 (TW)
(72) Inventor: Chiu, Pei-liang, 300 Hsinchu (TW)
(74) Representative: Murgitroyd & Company

(57) **Abstract**

A wearable device includes an antenna (12) configured to transmit and receive a short distance communication signal; a set of security chips (14) coupled to the antenna (12), including a plurality of security chips (141, 142) configured to process private information of a user; and a controller (16) disposed between the antenna (12) and the set of security chips (14), configured to enable one of the security chips (141, 142) in the set of security chips (14) based on a user operation, to transmit and receive the short distance communication signal via the antenna (12). A wristwatch and a short distance communication switch method are also provided. The user can select one of communication chips to carry out short distance communication with an external device. This improves convenience in using the electronic cards.

## Description

### BACKGROUND

### 1. Field of the Disclosure

The present disclosure relates to short distance communication technologies, and more particularly, to a wearable device, wristwatch, and a short distance communication switch method.

### 2. Description of Related Art

Short distance communication has been widely used in various application scenarios. Radio frequency identification (RFID) and near field communication (NFC) are common short distance communication technologies. Also, physical or virtual electronic cards, such as a transportation card, an entrance card, and an electronic payment card, conforming with RFID or NFC communication standard are widely used in a human's daily life.

Users of the electronic cards often have to carry various types of the physical cards. Even though current technologies can virtualize the cards and integrate them to smartphones, there are many physical electronic cards that still cannot be virtualized or are not in support of Virtualization. This makes the users inevitably have to carry these physical cards, and thus increases inconvenience. Accordingly, there is a need to provide a new solution to solve this problem.

### SUMMARY

The present disclosure provides a wearable device, a wristwatch, and a short distance communication switch method, for increasing convenience for a user in using electronic cards.

An aspect of the present disclosure provides a wearable device, including an antenna configured to transmit and receive a short distance communication signal; a set of security chips coupled to the antenna, including a plurality of security chips configured to process private information of a user; and a controller disposed between the antenna and the set of security chips , configured to enable one of the security chips in the set of security chips based on a user operation, to transmit and receive the short distance communication signal via the antenna.

Another aspect of the present disclosure provides a wristwatch, including a housing forming a receiving room, a part of the housing formed by a transparent cover, the wristwatch further including a dial, physical scales on a face of the dial, and physical indicators disposed above the dial and cooperating with the physical scales to show the time, the wristwatch further including an antenna configured to transmit and receive a short distance communication signal; a set of security chips coupled to the antenna, including a plurality of security chips configured to process private information of a user; a transparent conductive film attached to a face of the transparent cover, the transparent conductive film divided into a plurality of regions, each of the regions including a plurality of conductive wires that are interlaced with each other to construct a plurality of conductive units; a touch detector disposed in the receiving room and electrically connecting to the regions of the transparent conductive film, configured to detect an integral effect of electrical signal changes of all of the conductive units in each region to output a detecting signal; and a controller disposed in the receiving room, coupled to the touch detector, the set of security chips, and the antenna, configured to receive the detecting signal transmitted from the touch detector to enable one of the security chips in the set of security chips, to transmit and receive the short distance communication signal via the antenna.

Still another aspect of the present disclosure provides a short distance communication switch method, including providing an antenna for transmitting and receiving an electromagnetic signal to achieve short distance communication; and enabling one of security chips in a set of security chips disposed in a wearable device to transmit and receive the electromagnetic signal via the antenna, and disabling all the others of the security chips in the set of security chips.

In the wearable device of the present disclosure, two or more than two short distance communication chips (e.g., conforming with RFID or NFC communication standard) are deployed. The user can select one of the communication chips to carry out the short distance communication with the external device. This improves convenience for the user in using the electronic cards.

### BRIEF DESCRIPTION OF DRAWINGS

FIG. 1 is a schematic diagram showing a wearable device according to the present disclosure.
FIG. 2 is a schematic diagram showing a wearable device according to a first embodiment of the present disclosure.
FIG. 3 is a schematic diagram showing a wearable device according to a second embodiment of the present disclosure.
FIG. 4 is a schematic diagram showing a wearable device according to a third embodiment of the present disclosure.
FIG. 5 is a schematic diagram showing a wearable device according to a fourth embodiment of the present disclosure.
FIG. 6 is a schematic diagram showing a transparent conductive film according to the present disclosure.
FIG. 7 is a schematic diagram showing a wristwatch according to the present disclosure.
FIG. 8 is a flowchart of a short distance communication switch method according to the present disclosure.

### DETAILED DESCRIPTION OF PREFERRED EMBODIMENTS

To make the objectives, technical schemes, and technical effects of the present disclosure more clearly and definitely, the present disclosure will be described in details below by using embodiments in conjunction with the appending drawings. It should be understood that the specific embodiments described herein are merely for explaining the present disclosure, and as used herein, the term "embodiment" refers to an instance, an example, or an illustration but is not intended to limit the present disclosure. In addition, the articles "a" and "an" as used in the specification and the appended claims should generally be construed to mean "one or more" unless specified otherwise or clear from the context to be directed to a singular form.

The present disclosure provides a wearable device including a plurality of security chips configured for short distance communication. The short distance communication includes radio frequency identification (RFID) communication and near field communication (NFC), but is not limited thereto. A user may switch to one of the security chips and use it based on different situation demands. For example, one of electronic cards is used for the short distance communication. Accordingly, user convenience is improved.

In an example, a transportation card and an entrance card equipped with short distance communication function are deployed in the wearable device. The user may use a security chip of the transportation card for authentication when commuting and use the entrance card when reaching home. A card having electronic payment function may be incorporated in the wearable device. The types of the electronic cards are not limited in the present disclosure as long as they are equipped with the short distance communication function.

The following examples are illustrated with a wearable device having two security chips. It can be understood that the wearable device may have two or more than two security chips.

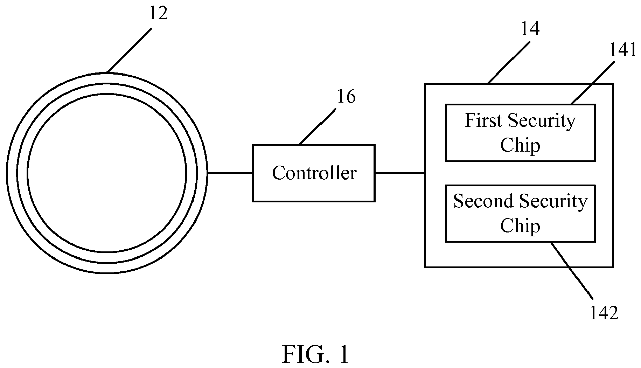

FIG. 1 is a schematic diagram showing a wearable device according to the present disclosure. The wearable device of the present disclosure includes an antenna 12, a set of security chips 14 including a first security chip 141 and a second security chip 142, and a controller 16. The antenna 12 may be disposed on an external face of an outer case of the wearable device. The set of security chips 14 and the controller 16 are disposed inside the outer case of the wearable device. The set of security chips 14 is coupled to the antenna 12. The controller 16 is disposed between the set of security chips 14 and the antenna 12. Preferably, the controller 16 is coupled between the set of security chips 14 and the antenna 12.

The antenna 12 is configured to transmit and receive an electromagnetic signal (i.e., a short distance communication signal). Specifically, when one security chip in the set of security chips 14 is to transmit a signal to an external device (e.g., a card reader), the antenna 12 is applied with an electric current varying with time to generate the electromagnetic signal. Alternatively, when the external device is to transmit a signal to one security chip in the set of security chips 14, the antenna 12 generates an electric current varying with time due to the external electromagnetic signal such that the one security chip can receive a signal transmitted from the external device. That is to say, the antenna 12 is used to deliver the electromagnetic signal to enable communication between the wearable device and the external device.

The security chips in the set of security chips 14 are used to process private information of a user. Specifically, both of the first security chip 141 and the second security chip 142 are used to process the private information of the user. In an embodiment, the first security chip 141 and the security chip 142 are security chips of different types of electronic cards, for example, the transportation card and the entrance card. In an embodiment, the first security chip 141 and the second security chip 142 belong to a same type of electronic card but they are security chips of two card entities, for example, two pieces of stored-value cards.

The controller 16 is configured to enable one of the first security chip 141 and the second security chip 142 based on a user operation, to transmit and receive the electromagnetic signal or the short distance communication signal via the antenna 12. Specifically, the controller 16 enables one security chip in the set of security chips 14 and disables all the other security chips in the set of security chips 14. In an example, assuming that the set of security chips 14 includes the first security chip 141, the second security chip 142, and a third security chip (not shown), the controller 16 may enable the first security chip 141 and disable all the other security chips including the second security chip 142 and the third security chip.

That is to say, when the user wants to use one electronic card (corresponding to one security chip) deployed in the wearable device, the user may have the controller 16 selecting the one security chip via the user operation to transmit and receive the short distance communication via the antenna 12 and have all the other security chips in a disabled state. In such a way, the user uses only one electronic card at a time. This avoids signal interference or other security issues.

Further, the controller 16 is configured to enable one of the first security chip 141 and the second security chip 142 for a predetermined period of time. In an example, one electronic card is activated by the user, and the one electronic card will be automatically deactivated after the predetermined period of time (e.g., 10 seconds). This can increase security, avoid skimming or eavesdropping, and reduce power consumption.

Specifically, the controller 16 may establish a path of connection between the antenna 12 and one the security chip and disconnect paths of connection between the antenna 12 and all the other security chips to enable the one security chip and disable all the other security chips. For example, the controller 16 establishes a path of connection between the first security chip 141 and the antenna 12 and disconnects a path of connection between the second security chip 142 and the antenna 12. In another aspect, the controller 16 may connect a security chip to a power source to enable the security chip and disconnect a security chip from the power source to disable the security chip.

In the wearable device of the present disclosure, two or more than two short distance communication chips (e.g., conforming with RFID or NFC communication standard) are deployed. The user can select one of the communication chips to carry out the short distance communication with the external device. This improves convenience for the user in using the electronic cards.

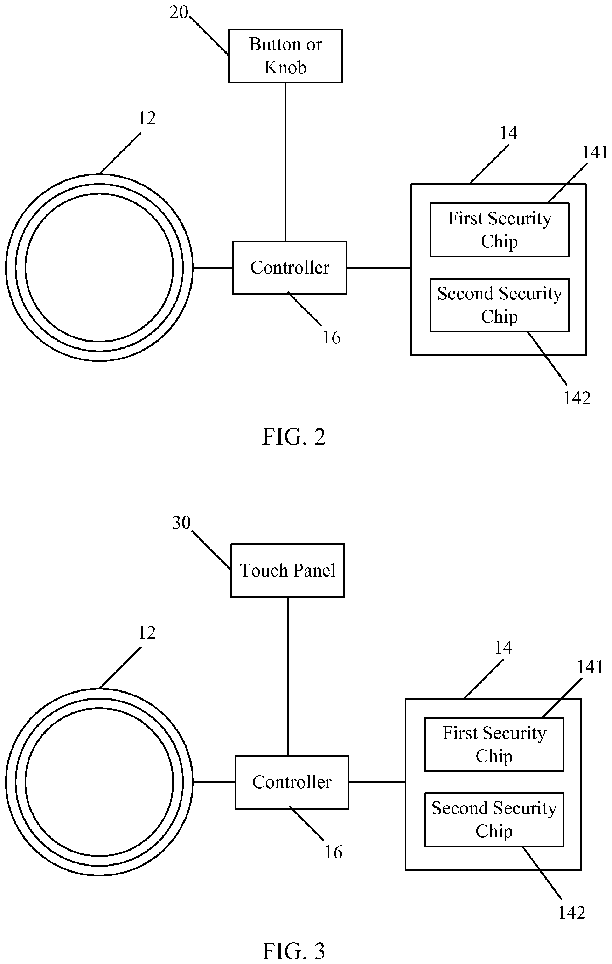

FIG. 2 is a schematic diagram showing a wearable device according to a first embodiment of the present disclosure. In the first embodiment, the wearable device further includes a button or knob 20 coupled to the controller 16. The button or knob 20 is disposed on an external face of the wearable device. The controller 16 receives the user operation via the button or knob 20 to enable one of the security chips. That is to say, the user selects one of the security chips via the button or knob 20 to execute the short distance communication.

FIG. 3 is a schematic diagram showing a wearable device according to a second embodiment of the present disclosure. In the second embodiment, the wearable device further includes a touch panel 30 coupled to the controller 16. The controller 16 receives the user operation via the touch panel 30 to enable one of the security chips. That is to say, touch operations made by the user on the touch panel 30 can select one of the security chips to execute the short distance communication. The touch panel 30 may combine with a display panel (not shown) to form a touch screen. The wearable device can be a smartwatch having the touch screen.

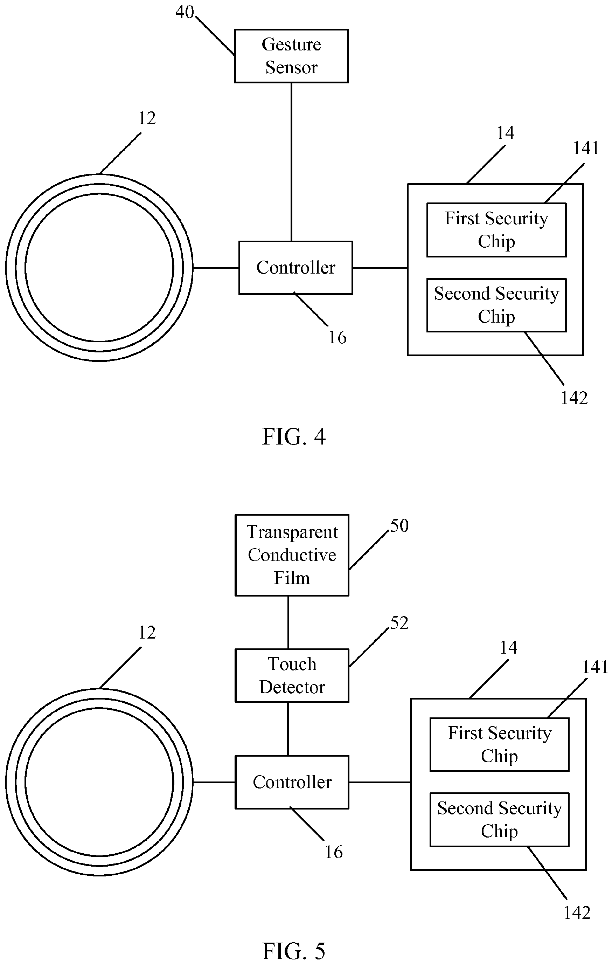

FIG. 4 is a schematic diagram showing a wearable device according to a third embodiment of the present disclosure. In the third embodiment, the wearable device further includes a gesture sensor 40 coupled to the controller 16. The gesture sensor 40 may be disposed inside the outer case of the wearable device. The gesture sensor 40 is configured to sense a gesture, a posture, or a motion of the user to generate a sensing signal. The controller 16 receives the sensing signal and enables one of the security chips based on the sensing signal. That is to say, when the user wears the wearable device, a gesture identifiable by the gesture sensor 40 may be made by the user to enable one of the security chips. For example, one times of a rotational motion can enable the first security chip 141 and disable the second security chip 142, and two times of the rotational motion can disable the first security chip 141 and enable the second security chip 142.

FIG. 5 is a schematic diagram showing a wearable device according to a fourth embodiment of the present disclosure. In the fourth embodiment, the wearable device further includes a transparent conductive film 50 and a touch detector 52. The transparent conductive film 50 is electrically connected to the touch detector 52. The touch detector 52 is coupled to the controller 16. The transparent conductive film 50 is disposed on the external face of the wearable device. The touch detector 52 is disposed inside the outer case of the wearable device. The transparent conductive film 50 and the touch detector 52 serve as an input device configured to receive a user input to achieve security chip switch function.

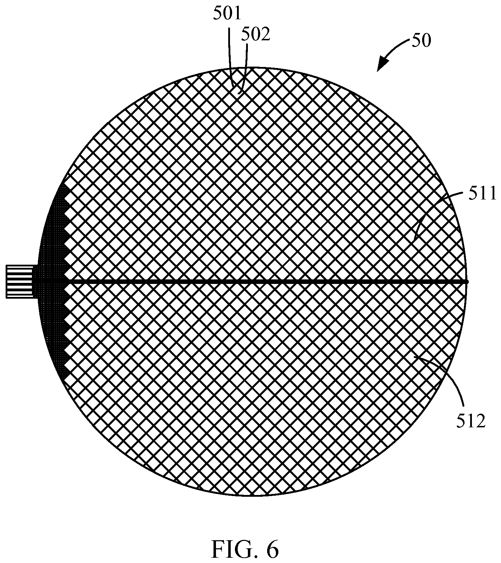

FIG. 6 is a schematic diagram showing a transparent conductive film according to the present disclosure. As shown in FIG. 6, the transparent conductive film 50 is a conductive film formed in a mesh shape. In practice, the mesh shape is formed by a plurality of ultra-fine metal lines. The transparent conductive film 50 is divided into a plurality of regions. These regions are electrically disconnected from each other. FIG. 6 is illustrated with two regions (i.e., a first region 511 and a second region 512). It can be understood that the transparent conductive film 50 can be divided into more than two regions that are electrically disconnected from each other. Each region includes a plurality of conductive wires 501 that are interlaced with each other to construct a plurality of conductive units 502. An integral effect of electrical signal changes (e.g., voltage or current signal changes) of all of the conductive units 502 in each region is generated by an approximal action or a touch action performed above or onto the region. For example, when a user's finger touches a region, a change of electric charges is generated in the region. By detecting electric charge changes of each region, it can be known which region is touched by the user's finger. The touch detector 52 is electrically connected to the regions of the transparent conductive film 50. Specifically, each region of the transparent conductive film 50 is connected to the touch detector 52 via a transmission wire. The touch detector 52 can detect changes of electric charges on the regions to determine which region is touched. The touch detector 52 detects an integral effect of electrical signal changes of all of the conductive units 502 in each region to output a detecting signal. The controller 16 receives the detecting signal transmitted from the touch detector 52 to enable one security chip and disable all the other security chips.

For example, the first security chip 141 corresponds to the first region 511 and the second security chip 142 corresponds to the second region 512. In an example, the first security chip 141 is enabled when the user clicks the first region 511, the second security chip 142 is enabled when the user clicks the second region 512. In another example, the first security chip 141 is enabled and the second security chip 142 is disabled when the user's finger slides from the first region 511 to the second region 512, the second security chip 142 is enabled and the first security chip 141 is disabled when the user's finger slides from the second region 512 to the first region 511.

It can be understood by a person skilled in the art that using the transparent conductive film 50 to detect user operations as described above is apparently different from touch operation sensing technologies used in conventional touch panels and image display technologies with pixel electrodes used in conventional display panels.

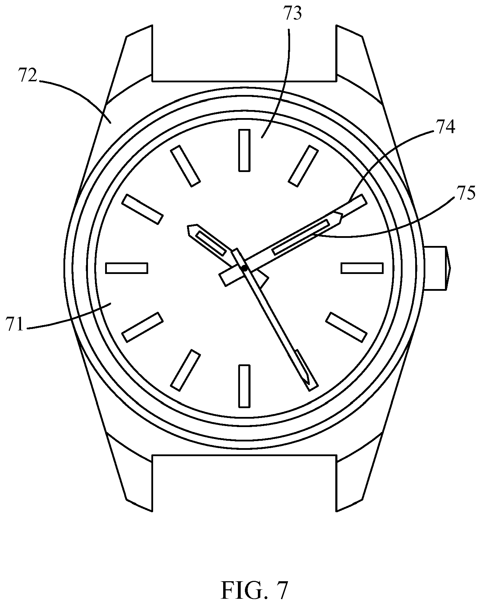

FIG. 7 is a schematic diagram showing a wristwatch according to the present disclosure. The wearable device of the present disclosure can be a wristwatch. As shown in FIG. 7, the wristwatch includes a housing, which includes a transparent cover 71 and an external cover 72. The transparent cover 71 is made of a transparent material (e.g., glass). A part of the housing if formed by the transparent cover 71. A receiving room is defined by the transparent cover 71 and the external cover 72. The wristwatch further includes a dial 73, a plurality of physical scales 74, and a plurality of physical indicators 75 that are disposed in the receiving room. The physical scales (e.g., hour scales) 74 are formed on a face of the dial 73. The physical indicators (e.g., a hour hand, minute hand, and second hand) 75 are disposed above the dial 73. The physical indicators 75 cooperate with the physical scales 74 to show the time. Through the transparent cover 71, the user can perceive the position information (i.e., the time information) indicated by the physical indicators 75.

In an embodiment, the transparent conductive film 50 is attached to a face (e.g., an inner face) of the transparent cover 71, the antenna 12 is disposed at any appropriate location of the wristwatch where signals are not significantly interfered, and the receiving room of the wristwatch receives the touch detector 52, the controller 16, and the set of security chips 14 having two or more than two security chips. In this way, switch function of the short distance communication chips can be achieved in a traditional wristwatch.

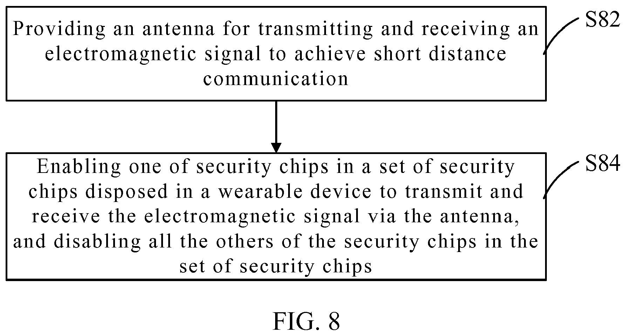

FIG. 8 is a flowchart of a short distance communication switch method according to the present disclosure. Referring to FIG. 8 with reference to the above context, the method includes the following steps.

In Step S82, the antenna 12 is provided for transmitting and receiving an electromagnetic signal to achieve short distance communication.

As shown in FIG. 1, the antenna 12 is disposed in the wearable device for transmit and receive a short distance communication signal conforming with RFID or NFC standard.

In Step S84, one security chip in the set of security chips 14 disposed in the wearable device is enabled to transmit and receive the electromagnetic signal via the antenna 12, and all the other security chips in the set of security chips 14 are disabled.

As shown in FIG. 1, the set of security chips 14 coupled to the antenna 12 and the controller 16 disposed between the antenna 12 and the set of security chips 14 are deployed in the wearable device. The set of security chips 14 includes two or more than two security chips (e.g., the first security chip 141 and the second security chip 142). The controller 16 enables one security chip in the set of security chips 14 and disables all the other security chips in the set of security chips 14. The enabled security chip can transmit and receive the short distance communication signal via the antenna 12.

Other details of the short distance communication switch method of the present disclosure can be referred to the descriptions on the wearable device and the wristwatch in the above context, and are not repeated herein.

While the preferred embodiments of the present disclosure have been illustrated and described in detail, various modifications and alterations can be made by persons skilled in this art. The embodiment of the present disclosure is therefore described in an illustrative but not restrictive sense. It is intended that the present disclosure should not be limited to the particular forms as illustrated, and that all modifications and alterations which maintain the realm of the present disclosure are within the scope as defined in the appended claims.

## Claims

1. A wearable device, **characterized in that** the wearable device comprises:
an antenna (12) configured to transmit and receive a short distance communication signal;
a set of security chips (14) coupled to the antenna (12), comprising a plurality of security chips (141, 142) configured to process private information of a user; and
a controller (16) disposed between the antenna (12) and the set of security chips (14), configured to enable one of the security chips (141, 142) in the set of security chips (14) based on a user operation, to transmit and receive the short distance communication signal via the antenna (12).

2. The wearable device according to claim 1, **characterized in that** the controller (16) is configured to enable one of the security chips (141, 142) and disable all the others of the security chips (141, 142).

3. The wearable device according to claim 2, **characterized in that** the controller (16) is configured to establish a path of connection between the antenna (12) and one of the security chips (141, 142) and disconnect paths of connection between the antenna (12) and all the others of the security chips (141, 142) to enable the one of the security chips (141, 142) and disable all the others of the security chips (141, 142).

4. The wearable device according to claim 1, **characterized in that** the controller (16) is configured to enable one of the security chips (141, 142) for a predetermined period of time.

5. The wearable device according to claim 1, **characterized in that** the set of security chips (14) comprises two or more than two security chips (141, 142).

6. The wearable device according to claim 1, **characterized in that** the short distance communication signal conforms with radio frequency identification (RFID) and/or near field communication (NFC) standards.

7. The wearable device according to claim 1, **characterized in that** the wearable device further comprises a button or knob (20) coupled to the controller (16), wherein the controller (16) receives the user operation via the button or knob (20) to enable one of the security chips (141, 142).

8. The wearable device according to claim 1, **characterized in that** the wearable device further comprises a touch panel (30) coupled to the controller (16), wherein the controller (16) receives the user operation via the touch panel (30) to enable one of the security chips (141, 142).

9. The wearable device according to claim 1, **characterized in that** the wearable device further comprises a gesture sensor (40) coupled to the controller (16) and configured to sense a hand gesture of a user to generate a sensing signal, wherein the controller (16) receives the sensing signal and enables one of the security chips (141, 142) based on the sensing signal.

10. The wearable device according to claim 1, **characterized in that** the wearable device further comprises:
a transparent conductive film (50) divided into a plurality of regions (511, 512), each of the regions (511, 512) comprising a plurality of conductive wires (501) that are interlaced with each other to construct a plurality of conductive units (502); and
a touch detector (52) coupled to the controller (16) and electrically connected to the regions (511, 512) of the transparent conductive film (50), configured to detect an integral effect of electrical signal changes of all of the conductive units (502) in each region (511, 512) to output a detecting signal,
wherein the controller (16) receives the detecting signal transmitted from the touch detector (52) to enable one of the security chips (141, 142).

11. The wearable device according to claim 1, **characterized in that** the wearable device further comprises the wearable device is a wristwatch comprising a housing forming a receiving room, a part of the housing is formed by a transparent cover (71), the wristwatch further comprises a dial (73), physical scales (74) on a face of the dial (73), and physical indicators (75) disposed above the dial (73), and the physical indicators (75) cooperate with the physical scales (74) to show the time.

12. A wristwatch, comprising a housing forming a receiving room, a part of the housing formed by a transparent cover (71), the wristwatch further comprising a dial (73), physical scales (74) on a face of the dial (73), and physical indicators (75) disposed above the dial (73) and cooperating with the physical scales (74) to show the time, **characterized in that** the wearable device further comprises:
an antenna (12) configured to transmit and receive a short distance communication signal;
a set of security chips (14) coupled to the antenna (12), comprising a plurality of security chips (141, 142) configured to process private information of a user;
a transparent conductive film (50) attached to a face of the transparent cover (71), the transparent conductive film (50) divided into a plurality of regions (511, 512), each of the regions (511, 512) comprising a plurality of conductive wires (501) that are interlaced with each other to construct a plurality of conductive units (502);
a touch detector (52) disposed in the receiving room and electrically connecting to the regions (511, 512) of the transparent conductive film (50), configured to detect an integral effect of electrical signal changes of all of the conductive units (502) in each region (511, 512) to output a detecting signal; and
a controller (16) disposed in the receiving room, coupled to the touch detector (52), the set of security chips (14), and the antenna (12), configured to receive the detecting signal transmitted from the touch detector (52) to enable one of the security chips (141, 142) in the set of security chips (14), to transmit and receive the short distance communication signal via the antenna (12).

13. The wristwatch according to claim 12, **characterized in that** the controller (16) is configured to enable one of the security chips (141, 142) and disable all the others of the security chips (141, 142).

14. The wristwatch according to claim 12, **characterized in that** the controller (16) is configured to enable one of the security chips (141, 142) for a predetermined period of time.

15. A short distance communication switch method, **characterized in that** the method comprises:
providing an antenna (12) for transmitting and receiving an electromagnetic signal to achieve short distance communication; and
enabling one of security chips (141, 142) in a set of security chips (14) disposed in a wearable device to transmit and receive the electromagnetic signal via the antenna (12), and disabling all the others of the security chips (141, 142) in the set of security chips (14).
